# EUROPEAN PATENT APPLICATION

(11) **EP 4 718 361 A1**
(43) Date of publication of application: **01.04.2026**
(21) Application number: 24857896.5
(22) Date of filing: 30.05.2024
(51) Int. Cl.: G06Q 30/0203, G06F 17/18

(54) **DATA ACQUISITION METHOD AND COMPUTING DEVICE CLUSTER**

(30) Priority: 30.08.2023 CN 202311102946
(71) Applicant: Huawei Technologies Co., Ltd., Shenzhen, Guangdong 518129 (CN)
(72) Inventor: LIN, Fangzheng, Shenzhen, Guangdong 518129 (CN); HAN, Li, Shenzhen, Guangdong 518129 (CN); LI, Qiaohui, Shenzhen, Guangdong 518129 (CN); DUAN, Rong, Shenzhen, Guangdong 518129 (CN); WANG, Weihao, Shenzhen, Guangdong 518129 (CN); YANG, Jiesheng, Shenzhen, Guangdong 518129 (CN); HU, Kangxing, Shenzhen, Guangdong 518129 (CN)
(74) Representative: Isarpatent
(86) International application number: PCT/CN2024/096442
(87) International publication number: WO 2025/044351

(57) **Abstract**

This application discloses a data collection method and a computing device cluster, relates to the field of computer technologies, and is applied to a scenario of collecting preference data of a user for a parameter of an object and a value of the parameter. The method includes: obtaining first information, where the first information indicates M parameters selected by the user and indicates at least one value of each of the M parameters, the M parameters correspond to one object, and M is a positive integer; determining a questionnaire based on the first information, where the questionnaire includes a first set including N elements, each of the N elements includes a value of at least one parameter, the at least one parameter belongs to the M parameters, the N elements include same parameters, values of at least one same parameter in the N elements are different, and N is a positive integer; and obtaining second information based on the questionnaire, to complete data collection on the user, where the second information indicates an element selected by the user from the N elements. This improves data collection efficiency.

## Description

### CROSS-REFERENCE TO RELATED APPLICATIONS

This application claims priority to Chinese Patent Application No. 202311102946.4, filed with the China National Intellectual Property Administration on August 30, 2023 and entitled "DATA COLLECTION METHOD AND COMPUTING DEVICE CLUSTER", which is incorporated herein by reference in its entirety.

### TECHNICAL FIELD

This application relates to the field of computer technologies, and in particular, to a data collection method and a computing device cluster.

### BACKGROUND

Value quantification of a product is necessary during a product design phase, a product development phase, or prior to product sales, to help enterprises make better product decisions. At present, enterprises usually use a choice-based conjoint analysis (choice-based conjoint analysis, CBC) method to indirectly quantify product values. This method assumes that a product is composed of multiple attributes (for example, a mobile phone has attributes such as appearance, price, and brand), and each attribute has multiple levels (for example, the price attribute has levels of CNY1,000, CNY2,000, CNY5,000, and the like). By collecting the preference data of consumers for the multiple attributes of the product and the multiple levels of each attribute, the value of the product can be quantified based on the preference data. For example, consumers may be presented with a choice task involving two virtual products: one product features brand A, a price of CNY1,000, and low resolution; the other features brand B, a price of CNY3,000, and high resolution. Consumers are asked to choose which product they prefer. The preference data from such choices indicate the consumer's selection, thus enabling companies to quantify the product's value based on this preference data.

However, two assumptions need to be met for the CBC: Assumption 1: Consumers are homogeneous, meaning that every consumer completes a same set of choice tasks; Assumption 2: consumers are highly patient and willing to complete multiple selection tasks. However, in actual market research, consumers' patience often declines when faced with repeated choice tasks, and they are often heterogeneous with different preferences. For example, if a consumer who dislikes apples is repeatedly forced to choose between apples and other fruits in the choice tasks, the persistent exposure to uninteresting attributes (for example, apples) may reduce the consumer's patience, cause the consumer to stop participating in the tasks midway, thus affecting the efficiency of data collection.

### SUMMARY

Embodiments of this application provide a data collection method and a computing device cluster, to improve data collection efficiency.

According to a first aspect, an embodiment of this application provides a data collection method. The method may be performed by a terminal device or a server. An example in which the method is performed by the terminal device is used. The method includes: The terminal device may obtain first information, where the first information indicates M parameters selected by a user and indicates at least one value of each of the M parameters, the M parameters correspond to one object, and M is a positive integer. The terminal device may determine a questionnaire based on the first information, where the questionnaire includes a first set including N elements, each of the N elements includes a value of at least one parameter, the at least one parameter belongs to the M parameters, the N elements include same parameters, values of at least one same parameter in the N elements are different, and N is a positive integer. The terminal device obtains second information based on the questionnaire, to complete data collection on the user, where the second information indicates an element selected by the user from the N elements.

In the foregoing solution, in this embodiment of this application, a preference of the user for multiple parameters of one object and multiple values of each parameter may be obtained based on the first information. Therefore, a set displayed to the user by using the questionnaire may be obtained based on a preferred parameter and/or a preferred value of the user, so that the questionnaire meets a personalized requirement of the user, to help improve patience of the user and improve data collection efficiency. In addition, in this embodiment of this application, the preference of the user for the multiple parameters of the object and the multiple values of each parameter may be further obtained based on the questionnaire, so that collected user data is more targeted, and more personalized content is set for the user, thereby improving user experience.

In a possible implementation, when the terminal device determines the questionnaire based on the first information, the terminal device may determine that a first parameter in the M parameters is a 1^{st} parameter in the first set, and determine that N values of the first parameter are N values of the 1^{st} parameter in the first set, where the N values of the first parameter are at least one value of the first parameter in the M parameters; the terminal device may determine that a second parameter that meets a first condition in the M parameters is an i^{th} parameter in the first set, and determine that N values of the second parameter are N values of the i^{th} parameter in the first set, where the N values of the second parameter are at least one value of the second parameter in the M parameters, and i is an integer greater than 1.

Values of parameters included in the first set in the questionnaire are preferred values of preferred parameters of the user, so that the questionnaire meets a personalized requirement of the user. In addition, a parameter other than the 1^{st} parameter in the first set meets the first condition. Therefore, first sets that meet different requirements may be obtained by setting different first conditions.

In a possible implementation, the first condition includes: A difference between a first weight and a second weight is less than a first threshold, where the first weight is a weight corresponding to any parameter of the 1^{st} parameter to an (i-1)^{th} parameter in the first set, and the second weight is a weight corresponding to the second parameter; a remaining occurrence count in the questionnaire is greater than a second threshold, and the remaining occurrence count is related to a preset total occurrence count; and the second parameter is different from each of the 1^{st} parameter to the (i-1)^{th} parameter in the first set. The i^{th} parameter in the first set is set to meet the first condition, so that a difference between weights of different parameters in the first set is not excessively large, and a probability that the user selects any element from the N elements in the first set is not excessively high. In addition, occurrence counts of the different parameters in the first set in the questionnaire can be balanced.

In a possible implementation, the first condition includes: A remaining occurrence count in the questionnaire is greater than a second threshold, and the remaining occurrence count is related to a preset total occurrence count; and the second parameter is different from each of the 1^{st} parameter to an (i-1)^{th} parameter in the first set. The i^{th} parameter in the first set is set to meet the first condition, so that the occurrence counts of the different parameters in the first set in the questionnaire can be balanced.

In a possible implementation, when the terminal device determines that the second parameter that meets the first condition in the M parameters is the i^{th} parameter in the first set, when a quantity of parameters that meet the first condition in the M parameters is greater than 1, the terminal device may determine, as the second parameter, one parameter from the parameters that meet the first condition, where the second parameter corresponds to a first distance, the first distance is a smallest value of distances corresponding to the M parameters, and the first distance is distances between the second parameter and the 1^{st} parameter to the (i-1)^{th} parameter in the first set.

At least one parameter whose remaining occurrence count in the questionnaire is greater than the second threshold is determined from the M parameters, and a parameter that is in the at least one parameter and that has a smallest distance from all determined parameters in the first set is determined as the i^{th} parameter in the first set, so that occurrence counts of different parameters in the first set in the questionnaire are balanced, and a difference between weights of the different parameters in the first set is not excessively large. Therefore, a probability that the user selects any element from the N elements in the first set is not excessively high.

In a possible implementation, the distances between the second parameter and the 1^{st} parameter to the (i-1)^{th} parameter in the first set are a smallest value of differences between a weight of the second parameter and weights of the 1^{st} parameter to the (i-1)^{th} parameter in the first set.

A distance between any parameter and a part of parameters in any set is defined as a smallest value of a difference between a weight of the any parameter and a weight of the part of the parameters in the any set, so that whether differences between the weight of the any parameter and weights of all determined parameters in the first set are excessively large can be determined by using distances between the any parameter and all the determined parameters in the first set.

In a possible implementation, the questionnaire further includes a second set, the second set is a set determined before the first set, and the first condition includes: The second parameter is included in the second set; and the second parameter is different from each of the 1^{st} parameter to an (i-1)^{th} parameter in the first set. The i^{th} parameter in the first set is set to meet the first condition, so that when a remaining occurrence count of a parameter that is different from any parameter determined in the first set in the questionnaire is insufficient, a parameter that is different from the any parameter determined in the first set can be determined from the previously determined second set as the i^{th} parameter in the first set.

In a possible implementation, when the terminal device determines that the second parameter in the M parameters is the i^{th} parameter in the first set, when a quantity of parameters that meet the first condition in the M parameters is greater than 1, the terminal device may determine, as the second parameter, one parameter from the parameters that meet the first condition, where the second parameter corresponds to a second distance, the M parameters further include a third parameter that meets a second condition, the third parameter corresponds to a third distance, a sum of the second distance and the third distance is the smallest, the second distance is distances between the second parameter and the 1^{st} parameter to the (i-1)^{th} parameter in the first set, and the third distance is distances between the third parameter and all parameters other than the second parameter in the second set.

The previously determined second set is traversed, so that the second parameter in the second set is used as the i^{th} parameter in the first set. Because a sum of distances from the second parameter to all determined parameters in the first set and distances from the third parameter to all parameters other than the second parameter in the second set is the smallest, a difference between weights of different parameters in the first set is not excessively large, and a probability that the user selects any element from the N elements in the first set is not excessively high.

In a possible implementation, the second condition includes: A remaining occurrence count in the questionnaire is greater than a second threshold; and the second parameter is different from each of the parameters other than the second parameter in the second set. The third parameter is set to meet the second condition, so that after the second parameter in the second set is replaced with the third parameter, occurrence counts of different parameters in the second set in the questionnaire can be balanced.

In a possible implementation, after the terminal device determines, as the second parameter, the parameter from the parameters that meet the first condition, the terminal device may further replace the second parameter in the second set with the third parameter.

Because a remaining occurrence count of the third parameter in the questionnaire is greater than the second threshold, occurrence counts of different parameters in the second set in the questionnaire can be balanced. In addition, because a sum of distances from the second parameter to all determined parameters in the first set and distances from the third parameter to all parameters other than the second parameter in the second set is the smallest, a difference between weights of different parameters in the second set is not excessively large, and a probability that the user selects any element from the N elements in the second set is not excessively high.

In a possible implementation, the terminal device may further determine a third set based on the first information. The terminal device may further determine a first loss corresponding to the third set, where the first loss indicates a difference between prior probabilities corresponding to N values of a fourth parameter in the third set, and the fourth parameter is any parameter in the third set. The terminal device may further perform a first update operation on the N values of the fourth parameter in the third set to obtain the first set, where N values of the fourth parameter in the first set and the N values of the fourth parameter in the third set have at least one different value, the first set corresponds to a second loss, the second loss indicates a difference between prior probabilities corresponding to the N values of the fourth parameter in the first set, and the second loss is less than the first loss.

The first set is obtained by replacing any value different from any one of the N values of the fourth parameter in the third set for the any value, and the difference between the prior probabilities corresponding to the N values of the fourth parameter in the first set is smaller than that in the third set, so that a probability that the user selects any element from the N elements in the first set is not excessively high.

In a possible implementation, when the terminal device performs the first update operation on the N values of the fourth parameter in the third set to obtain the first set, the terminal device may perform the first update operation on the N values of the fourth parameter in the third set to obtain a fourth set; the terminal device may determine a first difference corresponding to the fourth set, where the first difference indicates a difference between utilities corresponding to N elements in the fourth set, and a utility corresponding to any one of the N elements indicates a sum of prior probabilities corresponding to values of all parameters included in the any element; and the terminal device may perform a second update operation on N values of a fifth parameter in the fourth set to obtain the first set, where the fifth parameter is any parameter in the fourth set, a value of the fifth parameter of a first element in the first set is a value of the fifth parameter of a second element in the fourth set, a value of the fifth parameter of the second element in the first set is a value of the fifth parameter of the first element in the fourth set, the first set corresponds to a second difference, the second difference indicates a difference between utilities corresponding to the N elements in the first set, and the second difference is less than the first difference.

The first set is obtained by exchanging the value of the fifth parameter of the first element in the fourth set and the value of the fifth parameter of the second element, and a difference between utilities corresponding to the first element and the second element in the first set is smaller than that in the fourth set, so that a probability that the user selects any element from the N elements in the first set is not excessively high.

In a possible implementation, when the terminal device performs a second update operation on N values of a fifth parameter in the fourth set to obtain the first set, the terminal device may perform the second update operation on the N values of the fifth parameter in the fourth set to obtain a fifth set; the terminal device may determine an already occurrence count of a value of the fifth parameter of the first element in the fifth set in the questionnaire; and if the occurrence count is greater than a third threshold, the terminal device may perform a third update operation on the value of the fifth parameter of the first element in the fifth set to obtain the first set, where the already occurrence count of the value of the fifth parameter of the first element in the first set in the questionnaire is less than the third threshold, the first set corresponds to a third difference, the third difference indicates a difference between utilities corresponding to the N elements in the first set, the third difference is less than or equal to the second difference, the first set corresponds to a third loss, the third loss indicates a difference between prior probabilities corresponding to N values of the fifth parameter in the first set, the fifth set corresponds to a fourth loss, the fourth loss indicates a difference between prior probabilities corresponding to N values of the fifth parameter in the fifth set, and a difference between the third loss and the fourth loss is less than a fourth threshold.

A value of a parameter whose occurrence count is small in the questionnaire is replaced with a value of a parameter whose occurrence count is large in the questionnaire, so that occurrence counts of different values of any parameter of the questionnaire in the questionnaire are balanced.

According to a second aspect, this application further provides a data collection apparatus. The apparatus may exist independently, or may be disposed in a terminal device or a server. The apparatus has a function of implementing the method described in any one of the first aspect or the possible designs of the first aspect. The function may be implemented by hardware, or may be implemented by hardware by executing corresponding software. The hardware or the software includes one or more modules corresponding to the foregoing function, for example, may include an interface unit, a processing unit, and the like, and may further include a storage unit. The interface unit may be a human-machine interaction interface, may be a human-computer interaction interface, may be an input/output port of a device, or the like. This is not limited in this embodiment of this application. The processing unit may be a processor, a processing chip, or the like. This is not limited in this embodiment of this application either. The storage unit may be configured to store multiple index libraries. It is clear that the storage unit may alternatively be disposed in another device, for example, an access network device or a core network device. This is not limited in this embodiment of this application either.

The interface unit is configured to obtain first information, where the first information indicates M parameters selected by a user and indicates at least one value of each of the M parameters, the M parameters correspond to one object, and M is a positive integer.

The processing unit is configured to determine a questionnaire based on the first information, where the questionnaire includes a first set including N elements, each of the N elements includes a value of at least one parameter, the at least one parameter belongs to the M parameters, the N elements include same parameters, values of at least one same parameter in the N elements are different, and N is a positive integer.

The interface unit is configured to obtain second information based on the questionnaire, to complete data collection on the user, where the second information indicates an element selected by the user from the N elements.

In a possible implementation, the processing unit is specifically configured to: determine that a first parameter in the M parameters is a 1^{st} parameter in the first set, and determine that N values of the first parameter are N values of the 1^{st} parameter in the first set, where the N values of the first parameter are at least one value of the first parameter in the M parameters; determine that a second parameter that meets a first condition in the M parameters is an i^{th} parameter in the first set, and determine that N values of the second parameter are N values of the i^{th} parameter in the first set, where the N values of the second parameter are at least one value of the second parameter in the M parameters, and i is an integer greater than 1.

In a possible implementation, the first condition includes: A difference between a first weight and a second weight is less than a first threshold, where the first weight is a weight corresponding to any parameter of the 1^{st} parameter to an (i-1)^{th} parameter in the first set, and the second weight is a weight corresponding to the second parameter; a remaining occurrence count in the questionnaire is greater than a second threshold; and the second parameter is different from each of the 1^{st} parameter to the (i-1)^{th} parameter in the first set.

In a possible implementation, the first condition includes: A remaining occurrence count in the questionnaire is greater than a second threshold; and the second parameter is different from each of the 1^{st} parameter to an (i-1)^{th} parameter in the first set.

In a possible implementation, the processing unit is specifically configured to: when a quantity of parameters that meet the first condition in the M parameters is greater than 1, determine, as the second parameter, one parameter from the parameters that meet the first condition, where the second parameter corresponds to a first distance, the first distance is a smallest value of distances corresponding to the M parameters, and the first distance is distances between the second parameter and the 1^{st} parameter to the (i-1)^{th} parameter in the first set.

In a possible implementation, the distances between the second parameter and the 1^{st} parameter to the (i-1)^{th} parameter in the first set are a smallest value of differences between a weight of the second parameter and weights of the 1^{st} parameter to the (i-1)^{th} parameter in the first set.

In a possible implementation, the questionnaire further includes a second set, the second set is a set determined before the first set, and the first condition includes: The second parameter is included in the second set; and the second parameter is different from each of the 1^{st} parameter to an (i-1)^{th} parameter in the first set.

In a possible implementation, the processing unit is specifically configured to: when a quantity of parameters that meet the first condition in the M parameters is greater than 1, determine, as the second parameter, one parameter from the parameters that meet the first condition, where the second parameter corresponds to a second distance, the M parameters further include a third parameter that meets a second condition, the third parameter corresponds to a third distance, a sum of the second distance and the third distance is the smallest, the second distance is distances between the second parameter and the 1^{st} parameter to the (i-1)^{th} parameter in the first set, and the third distance is distances between the third parameter and all parameters other than the second parameter in the second set.

In a possible implementation, the second condition includes: A remaining occurrence count in the questionnaire is greater than a second threshold; and the second parameter is different from each of the parameters other than the second parameter in the second set.

In a possible implementation, the processing unit is further configured to replace the second parameter in the second set with the third parameter.

In a possible implementation, the processing unit is further configured to: determine a third set based on the first information; determine a first loss corresponding to the third set, where the first loss indicates a difference between prior probabilities corresponding to N values of a fourth parameter in the third set, and the fourth parameter is any parameter in the third set; and perform a first update operation on the N values of the fourth parameter in the third set to obtain the first set, where N values of the fourth parameter in the first set and the N values of the fourth parameter in the third set have at least one different value, the first set corresponds to a second loss, the second loss indicates a difference between prior probabilities corresponding to the N values of the fourth parameter in the first set, and the second loss is less than the first loss.

In a possible implementation, the processing unit is further configured to: perform the first update operation on the N values of the fourth parameter in the third set to obtain a fourth set; determine a first difference corresponding to the fourth set, where the first difference indicates a difference between utilities corresponding to N elements in the fourth set, and a utility corresponding to any one of the N elements indicates a sum of prior probabilities corresponding to values of all parameters included in the any element; and perform a second update operation on N values of a fifth parameter in the fourth set to obtain the first set, where the fifth parameter is any parameter in the fourth set, a value of the fifth parameter of a first element in the first set is a value of the fifth parameter of a second element in the fourth set, a value of the fifth parameter of the second element in the first set is a value of the fifth parameter of the first element in the fourth set, the first set corresponds to a second difference, the second difference indicates a difference between utilities corresponding to the N elements in the first set, and the second difference is less than the first difference.

In a possible implementation, the processing unit is further configured to: perform the second update operation on the N values of the fifth parameter in the fourth set to obtain a fifth set; determine an occurrence count of a value of the fifth parameter of the first element in the fifth set in the questionnaire; and if the occurrence count is greater than a third threshold, perform a third update operation on the value of the fifth parameter of the first element in the fifth set to obtain the first set, where the occurrence count of the value of the fifth parameter of the first element in the first set in the questionnaire is less than the third threshold, the first set corresponds to a third difference, the third difference indicates a difference between utilities corresponding to the N elements in the first set, the third difference is less than or equal to the second difference, the first set corresponds to a third loss, the third loss indicates a difference between prior probabilities corresponding to N values of the fifth parameter in the first set, the fifth set corresponds to a fourth loss, the fourth loss indicates a difference between prior probabilities corresponding to N values of the fifth parameter in the fifth set, and a difference between the third loss and the fourth loss is less than a fourth threshold.

According to a third aspect, an embodiment of this application further provides a computing device cluster, including at least one computing device. A structure of each computing device includes a processor and a memory. The processor is configured to support a terminal device or a server in performing the method according to any one of the first aspect or the possible designs of the first aspect. The memory is coupled to the processor, and stores program instructions and data that are necessary for a communication apparatus. The communication apparatus may further include a communication interface, configured to communicate with another device.

According to a fourth aspect, an embodiment of this application further provides a computer-readable storage medium, where the computer-readable storage medium includes computer program instructions. When the computer program instructions are executed by a computing device cluster, the computing device cluster is caused to perform the method according to any one of the first aspect or the possible designs of the first aspect.

According to a fifth aspect, an embodiment of this application further provides a computer program product including instructions. When the instructions are run by a computing device cluster, the computing device cluster is caused to perform the method according to any one of the first aspect or the possible designs of the first aspect.

According to a sixth aspect, an embodiment of this application further provides a chip. The chip may be coupled to a memory, and is configured to invoke a computer program stored in the memory, to perform the method according to any one of the first aspect or the possible designs of the first aspect.

For beneficial effects of the second aspect to the sixth aspect and the possible designs thereof, refer to the foregoing descriptions of the beneficial effects of the method according to any one of the first aspect and the possible designs of the first aspect.

### BRIEF DESCRIPTION OF DRAWINGS

FIG. 1 is a diagram of a principle of a choice-based conjoint analysis method;
FIG. 2 is a diagram of a structure of a data collection system according to an embodiment of this application;
FIG. 3 is a schematic flowchart of a data collection method according to an embodiment of this application;
FIG. 4a is a diagram of an interface according to an embodiment of this application;
FIG. 4b is a diagram of another interface according to an embodiment of this application;
FIG. 4c is a diagram of still another interface according to an embodiment of this application;
FIG. 4d is a diagram of still another interface according to an embodiment of this application;
FIG. 5 is a diagram of a structure of a computing device according to an embodiment of this application;
FIG. 6 is a diagram of a structure of a computing device cluster according to an embodiment of this application; and
FIG. 7 is a diagram of a connection manner of a computing device cluster according to an embodiment of this application.

### DESCRIPTION OF EMBODIMENTS

To make the objectives, technical solutions, and advantages of embodiments of this application clearer, the following describes embodiments of this application in detail with reference to accompanying drawings. Terms used in implementations of this application are only used to explain specific embodiments of this application, but are not intended to limit this application.

Before specific solutions provided in embodiments of this application are described, some terms in embodiments of this application are explained and described, to facilitate understanding by a person skilled in the art, but not to limit the terms in this application.
(1) In embodiments of this application, "multiple" means two or more. In view of this, in embodiments of this application, "multiple " may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". "And/or" describes an association relationship for describing associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.
   Unless otherwise specified, ordinal numbers such as "first" and "second" in embodiments of this application are used to distinguish between multiple objects, and are not intended to limit a sequence, a time sequence, priorities, or importance degrees of the multiple objects.
(2) Value quantification: Value quantification of a product is necessary during a product design phase or a product development phase, or prior to product sales, to help enterprises make better product decisions. For example, a value of product 1 may be quantified based on benefits brought by differences between product 1 and product 2, where product 2 is a product similar to product 1 in the market, that is, direct quantification is performed. Alternatively, a value of product 1 may be quantified based on preferences of consumers for attributes that constitutes product 1 (for example, a mobile phone has attributes such as appearance, price, and brand) and an attribute level (for example, the price attribute has levels such as CNY1,000, CNY2,000, and CNY5,000), that is, indirect quantification is performed.
(3) Conjoint analysis method: It is a method for indirectly quantifying a value of a product. In this method, it is assumed that the product includes multiple attributes, and each attribute has multiple levels. Because consumers comprehensively consider the multiple attributes of the product and the multiple levels of each attribute during selection of the product, in this method, the value of the product may be quantized by researching roles of the multiple attributes of the product and the multiple levels of each attribute during selection of the product performed by the consumer. In other words, in this method, preference data of the consumers for the multiple attributes of the product and the multiple levels of each attribute may be collected, and the value of the product may be quantized based on the preference data.

The conjoint analysis method includes a rating-based conjoint analysis method and a choice-based conjoint analysis (choice-based conjoint analysis, CBC) method. The rating-based conjoint analysis method is not suitable for purchase behavior of the consumer in a real scenario, and therefore, is seldomly used in actual market research. In the choice-based conjoint analysis method, the consumer performs selection between the multiple attributes of the product and between the multiple levels of each attribute, so that the purchase behavior of the consumer in the real scenario is well simulated.

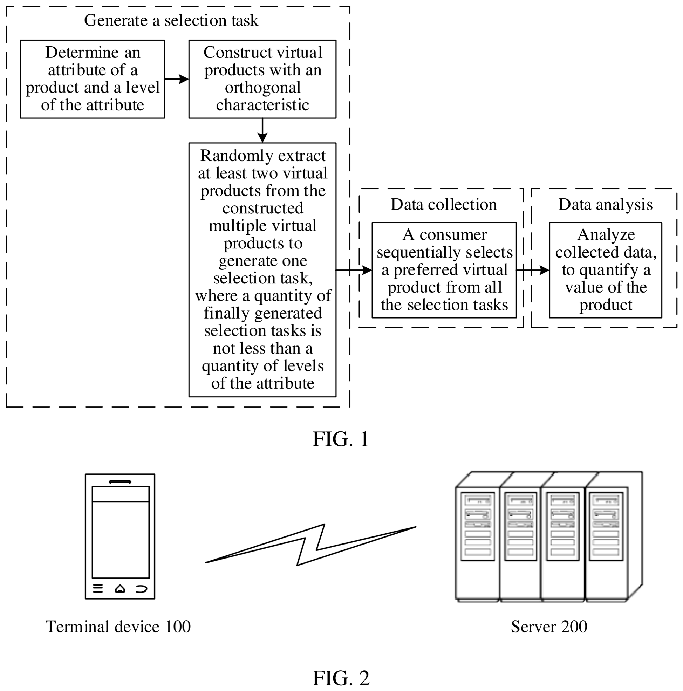

For example, FIG. 1 is a diagram of a principle of a choice-based conjoint analysis method. As shown in FIG. 1, a core of the method is to perform orthogonal combination on multiple attributes of a product and multiple levels of each attribute, to generate multiple virtual products, and enable, by performing orthogonal comparison on the multiple virtual products, a consumer to select a preferred virtual product, to collect preference data of the consumer for the multiple attributes of the product and the multiple levels of each attribute, and quantize a value of the product based on the preference data. Specific steps are as follows.

Step 1: Determine an attribute of a product and a level of the attribute. For example, it is determined that attributes of the product may be brand and resolution. In this case, levels of the attributes may be various types of specific brands and various types of specific resolution.

Step 2: Construct virtual products with an orthogonal characteristic, to be specific, levels of attributes that constitute the virtual products have the orthogonal characteristic. For example, the product has five attributes, and each attribute has four levels. When a full factorial design of experiment is used, there should be 4×4×4×4×4=1024 virtual products, and this goes far beyond a rational determining range of the consumer. Therefore, an orthogonal experimental design is used in the choice-based conjoint analysis method, and an orthogonal local part is selected to represent the whole, thereby reducing a quantity of virtual products.

Step 3: Randomly extract at least two virtual products from the constructed multiple virtual products to generate one selection task, where a quantity of finally generated selection tasks is not less than a quantity of levels of the attribute. For example, two virtual products are extracted to generate one selection task and the selection task is displayed to the consumer: one virtual product featuring brand A, a price of CNY1,000, and low resolution, and the other virtual product featuring brand B, a price of CNY3,000, and high resolution. The consumer may select a preferred virtual product from the two virtual products.

Step 4: The consumer sequentially selects a preferred virtual product from all the selection tasks.

Step 5: Analyze data collected in step 4, to quantify a value of the product.

However, two assumptions need to be met when the selection task is generated in steps 1 to 3: Assumption 1: Consumers have homogeneity, to be specific, multiple selection tasks that the consumers need to complete are the same. Assumption 2: The consumer has very good patience and is willing to complete the multiple selection tasks. However, in actual market research, the consumer usually has limited patience when facing the multiple selection tasks. In addition, the consumers usually have heterogeneity, and different consumers have different preferences. If an attribute that a consumer is not interested in always occurs in the selection tasks, for example, a person who does not like apples is always asked to select a preferred fruit from the apples and another fruit, consumer patience is reduced. As a result, the consumer may stop performing selection midway, affecting data collection efficiency and further affecting a subsequent value quantification process.

For a problem of low data collection efficiency described in the foregoing content, embodiments of this application provide a data collection method. The method may be applied to a scenario in which preference data of a user for multiple parameters (that is, the foregoing attributes) of an object (that is, the foregoing product) and multiple values (that is, the foregoing levels) of each parameter is collected, to quantize a value of the object based on the preference data. The method may be applied to a data collection system. The data collection system may include one or more terminal devices and/or one or more servers. It is clear that in addition to including the terminal device and the server, the data collection system provided in embodiments of this application may further include other devices such as an access network device and a core network device. This is not limited in embodiments of this application. In addition, functions of any device in embodiments of this application may be integrated into one independent physical unit, or the functions may be distributed in multiple independent physical units. This is not limited in embodiments of this application either.

For example, FIG. 2 is a diagram of a structure of a data collection system according to an embodiment of this application. FIG. 2 shows one terminal device and one server: a terminal device 100 and a server 200. During actual application, a quantity of terminal devices included in the system and/or a quantity of servers included in the system are/is not limited thereto.

In a possible implementation, after obtaining first information, the terminal device 100 may determine a questionnaire based on the first information, and obtain second information based on the questionnaire, to complete data collection on a user.

In another possible implementation, after obtaining first information, the terminal device 100 may send the first information to the server 200. The server 200 may determine a questionnaire based on the first information, and send the questionnaire to the terminal device 100. The terminal device 100 may obtain second information based on the questionnaire, and send the second information to the server 200, to complete data collection on a user.

It may be understood that the terminal device 100 may be a device that is configured with a display screen and that can perform human-machine interaction by using the display screen. For example, the terminal device 100 may be a mobile phone, a tablet computer, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a wearable device, or the like. A specific type of the terminal device 100 is not limited in this embodiment of this application.

The server 200 may be a single server, or may be a server cluster including multiple servers. The server 200 may be specifically a cloud server, and is also referred to as a cloud, a cloud client, a cloud client server, a cloud client controller, or the like. The cloud server is a general term for a device or a component that has a data processing capability. For example, the cloud server may include a physical device like a host or a processor, may also include a virtual device like a virtual machine or a container, and may further include a chip or an integrated circuit.

Information exchange between the terminal device 100 and the server 200 may be direct interaction between the terminal device 100 and the server 200 in a wired manner or a wireless manner, or may be indirect interaction between the terminal device 100 and the server 200 via one or more other devices. This is not limited in this embodiment of this application.

The foregoing content describes a possible application scenario and an applicable system architecture of the data collection method provided in embodiments of this application. The following further describes the data collection method provided in embodiments of this application with reference to the structure of the data collection system shown in FIG. 2.

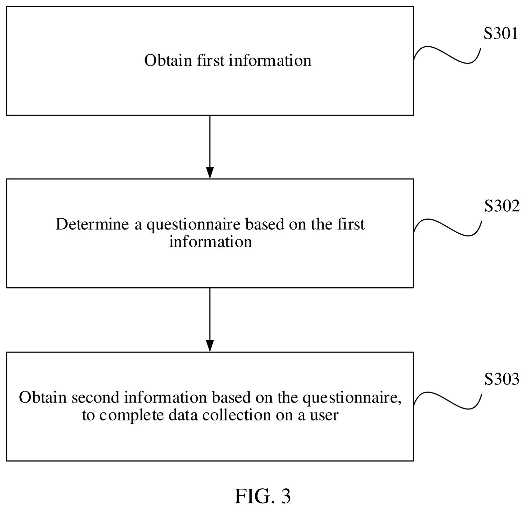

For example, FIG. 3 is a schematic flowchart of a data collection method according to an embodiment of this application. The data collection method may be applied to the data collection system shown in FIG. 2 or a data collection system with a function structure similar to that of the data collection system in FIG. 2. This is not specifically limited in this embodiment of this application. A specific procedure of the data collection method is described as follows. In the following description process, an example in which the method is applied to the data collection system shown in FIG. 2 is used. For example, a terminal device described below may be the terminal device 100 in the system shown in FIG. 2, and a server described below may be the server 200 in the system shown in FIG. 2. In this embodiment of this application, an example in which the method is performed by the data collection system is used for description. Alternatively, the method may be performed by another apparatus or system, for example, a chip, a chip system, or a processor used in the data collection system.

S301: Obtain first information.

In this embodiment of this application, the first information may indicate M parameters selected by a user and indicate at least one value of each of the M parameters, the M parameters correspond to one object, and M is a positive integer.

The M parameters may include at least one target parameter selected by the user from at least one candidate parameter of the object. The at least one value of each of the M parameters may include at least one target value selected by the user from at least one candidate value of each of the at least one target parameter.

The object may be a saleable product or service, for example, a mobile phone or a television. A parameter of the object may be a parameter that constitutes the object. For example, the mobile phone has parameters such as brand, price, and appearance. Values of the parameter may be various types of specific parameters. For example, the price has values such as CNY1,000, CNY2,000, and CNY3,000.

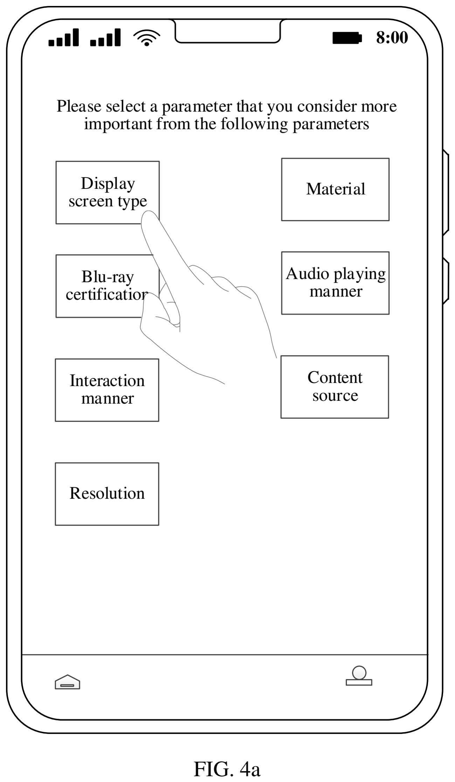

During specific implementation, the terminal device may display, on a display screen, an interface shown in FIG. 4a. The interface may display at least one candidate parameter of a vehicle-mounted display screen, for example, parameters such as a display screen type, material, Blu-ray certification, audio playing manner, interaction manner, content source, and resolution, and prompt the user to select text of at least one target parameter from the at least one candidate parameter of the vehicle-mounted display screen, for example, "please select a parameter that you consider more important from the following parameters". The user may select the display screen type, the Blu-ray certification, and the audio playing manner from the display screen type, the material, the Blu-ray certification, the audio playing manner, the interaction manner, the content source, and the resolution.

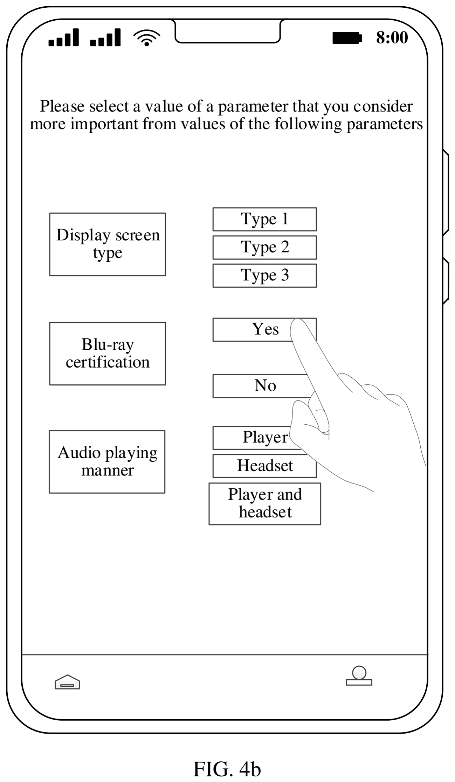

When the terminal device detects an operation of selecting the display screen type, the Blu-ray certification, and the audio playing manner by the user, in response to the operation, the terminal device may display, on the display screen, an interface shown in FIG. 4b. The interface may display at least one candidate value of the display screen type, at least one candidate value of the Blu-ray certification, and at least one candidate value of the audio playing manner, for example, for the display screen type: type 1, type 2, and type 3; for the Blu-ray certification: with Blu-ray certification and without Blu-ray certification; and for the audio playing manner: player playing, headset playing, and player playing and headset playing, and prompt the user to select text of at least one target value from the at least one candidate value, for example, "please select a value of a parameter that you consider more important from values of the following parameters". The user may select type 1 and type 3 from type 1, type 2, and type 3.

In a possible implementation, when the terminal device displays at least one candidate value of one target parameter on the display screen, the terminal device may determine, based on a relationship of the at least one candidate value of the target parameter, whether to display the at least one candidate value of the target parameter. The relationship of the at least one candidate value of the target parameter includes a parallel relationship, a mutual exclusion relationship, and an inclusion relationship.

For example, three candidate values (for example, type 1, type 2, and type 3) of the display screen type are in the parallel relationship, and the user may select at least one target value from the three candidate values. Therefore, the terminal device may display the three candidate values on the display screen for the user to select.

For another example, two candidate values (for example, with the Blu-ray certification and without the Blu-ray certification) of the Blu-ray certification are in the mutual exclusion relationship, and the user can select only one target value from the two candidate values. Therefore, the terminal device may not display the two candidate values on the display screen for the user to select, but directly use the two candidate values as target values.

For still another example, three candidate values (for example, player playing, headset playing, and player playing and headset playing) of the audio playing manner are in the inclusion relationship. "Player playing and headset playing" is a parent candidate value, and "player playing" and "headset playing" are child candidate values. The user selects the parent candidate value as a target value, and this is equivalent to selecting all child candidate values of the parent candidate value as the target value. Therefore, the terminal device may display the child candidate values in the three candidate values on the display screen for the user to select, but not display the parent candidate value in the three candidate values on the display screen for the user to select, and directly use the parent candidate value in the three candidate values as the target value.

In another possible implementation, before displaying at least one candidate value of one target parameter on the display screen, the terminal device may determine a prior probability of each candidate value in the at least one candidate value of the target parameter through a pre-experiment. A prior probability of a first candidate value of the target parameter indicates a probability that the user selects the first candidate value from the at least one candidate value of the target parameter. For example, a brand has three parameters: brand 1, brand 2, and brand 3. When brand 1 is used as a benchmark, a prior probability of brand 1 is 0, a prior probability of the brand 2 is 0.1, and a prior probability of brand 3 is 0.2.

After the user determines at least one target value from the at least one candidate value of the target parameter, that is, after the terminal device obtains at least one target value of the target parameter, the terminal device may update a prior probability of each of the at least one target value of the target parameter. A prior probability of a first target value of the target parameter indicates a probability that the user selects the first target value from the at least one target value of the target parameter. For example, after selecting the brand 2 and the brand 3 from the brand 1, the brand 2, and the brand 3, the user updates the prior probabilities of the brand 2 and the brand 3. When the brand 2 is used as a benchmark, the prior probability of the brand 2 is updated to 0, and the prior probability of the brand 3 is updated to 0.1.

S302: Determine a questionnaire based on the first information.

In this embodiment of this application, the questionnaire may include a first set. The first set includes N elements, each of the N elements includes a value of at least one parameter, the at least one parameter belongs to the M parameters indicated by the first information obtained in S302, the N elements include same parameters, values of at least one same parameter in the N elements are different, and N is a positive integer. The questionnaire is a manner of displaying the first set. In this application, the first set may be displayed to the user by using the questionnaire, to determine a preferred element selected by the user from different elements in the first set. It is clear that the first set may alternatively be displayed in another manner in this application. This is not specifically limited in this embodiment of this application.

For example, the questionnaire includes set 1, set 1 includes element 1 and element 2, and a relationship between element 1 and element 2 in set 1 may be as shown in Table 1.

**Table 1**

| Set 1 | Element 1 | Element 2 |
|---|---|---|
| Brand | Brand 1 | Brand 2 |
| Price | CNY6,000 | CNY5,000 |
| Resolution | High | Low |

During specific implementation, after the terminal device obtains the first information, the terminal device may determine the questionnaire based on the first information. Alternatively, after the terminal device obtains the first information, the terminal device may send the first information to the server, and the server may determine the questionnaire based on the first information and send the questionnaire to the terminal device. This is not specifically limited in this embodiment of this application. For ease of description, an example in which the terminal device determines the questionnaire based on the first information is used in this application.

In a possible implementation, there may be one or more sets in the questionnaire. Specifically, the terminal device may determine a quantity of sets in the questionnaire based on the parameters and quantities of values of the parameters indicated by the first information. For example, the first information indicates four parameters (that is, M is 4): parameter 1, parameter 2, parameter 3, and parameter 4. Parameter 1 has two values, parameter 2 has three values, parameter 3 has four values, and parameter 4 has four values. In this case, the quantity of sets in the questionnaire is 2+3+4+4-4+5=14.

In another possible implementation, when there are multiple sets in the questionnaire, after determining the multiple sets at a time based on the first information, the terminal device may sequentially display the multiple sets by using the display screen, to obtain, through collection, preference data of the user for different elements in each of the multiple sets. Alternatively, after determining a set based on the first information, the terminal device may sequentially display the set by using the display screen, to obtain, through collection, preference data of the user for different elements in the set, and then determine another set based on the first information and sequentially display the another set by using the display screen, to obtain, through collection, preference data of the user for different elements in the another set, where the latter set may be related or unrelated to the preference data of the user for the different elements in the former set. This is not specifically limited in this embodiment of this application. For ease of description, an example in which the terminal device determines the multiple sets at a time based on the first information is used in this application.

For example, the terminal device may perform the following steps A1 and A2 to determine the first set.

Step A1: Determine that a first parameter in the M parameters is a 1^{st} parameter in the first set, and determine that N values of the first parameter are N values of the 1^{st} parameter in the first set, where the N values of the first parameter are at least one value of the first parameter in the M parameters.

Specifically, the terminal device may perform unequal probability sampling on the M parameters to obtain the first parameter, and perform unequal probability sampling on the at least one value of the first parameter to obtain the N values of the first parameter.

A sampling probability of any one of the M parameters is positively correlated with a remaining occurrence count of the any parameter in the questionnaire, a sampling probability of any value of the any parameter is positively correlated with twice of the remaining occurrence count of the any parameter in the questionnaire, the remaining occurrence count of the any parameter in the questionnaire is a total occurrence count of the any parameter in the questionnaire minus an occurrence count of the any parameter in the questionnaire, and the total occurrence count of the any parameter in the questionnaire is negatively correlated with a quantity of values of the any parameter.

For example, the first information indicates four parameters (that is, M is 4): parameter 1, parameter 2, parameter 3, and parameter 4. Parameter 1 has three values: value 1, value 2, and value 3. Unequal probability sampling is performed on parameter 1, parameter 2, parameter 3, and parameter 4 to obtain the 1^{st} parameter in the first set. A sampling probability of parameter 1 is Q1∝(T1-T2), where ∝ is a proportional symbol, T1 is a total occurrence count of parameter 1 in the questionnaire, T1∝(1/2), and T2 is an occurrence count of parameter 1 in the questionnaire. When unequal probability sampling is performed on the values of parameter 1 to obtain the N values of the first parameter, a sampling probability of value 1 is Q2∝(2*T1).

Step A2: Determine that a second parameter in the M parameters is an i^{th} parameter in the first set, and determine that N values of the second parameter are N values of the i^{th} parameter in the first set, where the second parameter meets a first condition, the N values of the second parameter are at least one value of the second parameter in the M parameters, and i is an integer greater than 1.

Specifically, the terminal device may determine the second parameter based on three first conditions by using three solutions. The following separately describes in detail specific implementations of the three solutions with reference to specific instances.

Solution 1: Any parameter that meets the first condition in a first possible implementation in the M parameters is determined as the second parameter.

In the first possible implementation, the first condition may include: A difference between a first weight and a second weight is less than a first threshold, where the first weight is a weight corresponding to any parameter of the 1^{st} parameter to an (i-1)^{th} parameter in the first set, and the second weight is a weight corresponding to the second parameter; the remaining occurrence count in the questionnaire is greater than a second threshold; and the second parameter is different from each of the 1^{st} parameter to the (i-1)^{th} parameter in the first set.

A weight of a parameter may be a difference between a first prior probability of the parameter and a second prior probability of the parameter. The first prior probability of the parameter is a prior probability of a value with a highest prior probability in values of the parameter, and the second prior probability of the parameter is a prior probability of a value with a lowest prior probability in the values of the parameter. For example, a brand has four parameters: brand 1, brand 2, and brand 3. When brand 1 is used as a benchmark, a prior probability of brand 1 is 0, a prior probability of brand 2 is 0.1, and a prior probability of brand 3 is 0.2. Therefore, a weight of brand is a difference 0.2 between the prior probability of brand 3 and the prior probability of brand 1.

For example, the first information indicates four parameters (that is, M is 4): parameter 1, parameter 2, parameter 3, and parameter 4. Parameter 1 has two values, parameter 2 has three values, parameter 3 has four values, and parameter 4 has four values. After it is determined that parameter 1 is the 1^{st} parameter in the first set, if all differences between weights of parameter 2, parameter 3, and parameter 4 and a weight of parameter 1 are less than the first threshold, both remaining occurrence counts of parameter 2 and parameter 3 in the questionnaire are greater than the second threshold, and a remaining occurrence count of parameter 4 in the questionnaire is less than or equal to the second threshold, it may be determined that both parameter 2 and parameter 3 meet the first condition in the first possible implementation, and parameter 4 does not meet the first condition in the first possible implementation. Therefore, unequal probability sampling may be performed on parameter 2 and parameter 3 to obtain a 2^{nd} parameter in the first set. A sampling probability of parameter 2 is Q3∝(T3-T4), where T3 is a total occurrence count of parameter 2 in the questionnaire, T3∝(1/3), and T4 is an occurrence count of parameter 2 in the questionnaire. A sampling probability of parameter 3 is Q4∝(T5-T6), where T5 is a total occurrence count of parameter 3 in the questionnaire, T5∝(1/4), and T6 is an occurrence count of parameter 3 in the questionnaire.

Solution 2: When a quantity of parameters that meet the first condition in a second possible implementation in the M parameters is greater than 1, one parameter is determined as the second parameter from the parameters that meet the first condition.

In the second possible implementation, the first condition includes: The remaining occurrence count in the questionnaire is greater than a second threshold; and the second parameter is different from each of the 1^{st} parameter to an (i-1)^{th} parameter in the first set.

The second parameter corresponds to a first distance (also referred to as a first rank distance). The first distance is a smallest value of distances corresponding to the M parameters. The first distance is distances between the second parameter and the 1^{st} parameter to the (i-1)^{th} parameter in the first set. The distances between the second parameter and the 1^{st} parameter to the (i-1)^{th} parameter in the first set are a smallest value of differences between a weight of the second parameter and weights of the 1^{st} parameter to the (i-1)^{th} parameter in the first set.

For example, the first information indicates five parameters (that is, M is 5): parameter 1, parameter 2, parameter 3, parameter 4, and parameter 5. After parameter 1 is determined as the 1^{st} parameter in the first set, and parameter 2 is determined as a 2^{nd} parameter in the first set, if all differences between weights of parameter 3, parameter 4, and parameter 5 and a weight of parameter 1 are greater than or equal to a first threshold, all differences between the weights of parameter 3, parameter 4, and parameter 5 and a weight of parameter 2 are also greater than or equal to the first threshold, both remaining occurrence counts of parameter 3 and parameter 4 in the questionnaire are greater than the second threshold, and a remaining occurrence count of parameter 5 in the questionnaire is less than or equal to the second threshold, it may be determined that none of parameter 3, parameter 4, and parameter 5 meets the first condition in the foregoing first possible implementation, both parameter 3 and parameter 4 meet the first condition in the second possible implementation, and parameter 5 does not meet the first condition in the second possible implementation.

Therefore, first distance d1 corresponding to parameter 3 and first distance d2 corresponding to parameter 4 may be determined. d1 is a smaller one of r1 and r2, r1 is the difference between the weight of parameter 3 and the weight of parameter 1, and r2 is the difference between the weight of parameter 3 and the weight of parameter 2. d2 is a smaller one of r3 and r4, r3 is the difference between the weight of parameter 4 and the weight of parameter 1, and r4 is the difference between the weight of parameter 4 and the weight of parameter 2. If d1 is less than d2, it may be determined that parameter 3 is a 3^{rd} parameter in the first set.

Solution 3: When a quantity of parameters that meet the first condition in a third possible implementation in the M parameters is greater than 1, one parameter is determined as the second parameter from the parameters that meet the first condition.

In the third possible implementation, if there are multiple sets in the questionnaire, the questionnaire may further include a second set. The second set is a set determined before the first set, the second set includes N elements, each of the N elements includes a value of at least one parameter, the at least one parameter belongs to the M parameters obtained in S302, the N elements include same parameters, and values of at least one same parameter in the N elements are different. The first condition may include: The second parameter is included in the second set; and the second parameter is different from each of the 1^{st} parameter to an (i-1)^{th} parameter in the first set.

The second parameter corresponds to a second distance, the M parameters further include a third parameter that meets a second condition, the third parameter corresponds to a third distance, a sum of the second distance and the third distance is the smallest, the second distance is distances between the second parameter and the 1^{st} parameter to the (i-1)^{th} parameter in the first set, and the third distance is distances between the third parameter and all parameters other than the second parameter in the second set. The second condition includes: The remaining occurrence count in the questionnaire is greater than a second threshold; and the second parameter is different from each of the parameters other than the second parameter in the second set.

Optionally, after one parameter is determined as the second parameter from the parameters that meet the first condition in the third possible implementation, the second parameter in the second set may be further replaced with the third parameter.

For example, the first information indicates five parameters (that is, M is 5): parameter 1, parameter 2, parameter 3, parameter 4, and parameter 5. After parameter 1 is determined as the 1^{st} parameter in the first set, and parameter 2 is determined as a 2^{nd} parameter in the first set, if all differences between weights of parameter 3, parameter 4, parameter 5 and a weight of parameter 1 are greater than or equal to a first threshold, all differences between the weights of parameter 3, parameter 4, and parameter 5 and a weight of parameter 2 are also greater than or equal to the first threshold, and remaining occurrence counts of parameter 3, parameter 4, and parameter 5 in the questionnaire are less than or equal to the second threshold, it may be determined that none of parameter 3, parameter 4, and parameter 5 meets the first condition in the foregoing first possible implementation and the foregoing second possible implementation.

If the second set includes three parameters: parameter 1, parameter 3, and parameter 4, it may be determined that both parameter 3 and parameter 4 meet the first condition in the third possible implementation. If a remaining occurrence count of parameter 2 in the questionnaire is greater than the second threshold, it may be determined that parameter 2 meets the second condition.

Therefore, first distance d1 corresponding to parameter 3, first distance d2 corresponding to parameter 4, and second distance d3 (the second parameter in the second set: parameter 3) and second distance d4 (the second parameter in the second set: parameter 4) that correspond to parameter 2 may be determined. d1 is a smaller one of r1 and r2, r1 is the difference between the weight of parameter 3 and the weight of parameter 1, and r2 is the difference between the weight of parameter 3 and the weight of parameter 2. d2 is a smaller one of r3 and r4, r3 is the difference between the weight of parameter 4 and the weight of parameter 1, and r4 is the difference between the weight of parameter 4 and the weight of parameter 2. d3 is a smaller one of r5 and r6, r5 is a difference between the weight of parameter 2 and the weight of parameter 1, and r4 is a difference between the weight of parameter 2 and the weight of parameter 3. d4 is a smaller one of r5 and r7, and r7 is a difference between the weight of parameter 2 and the weight of parameter 4. If d1+d3 is less than d2+d4, it may be determined that parameter 3 is a 3^{rd} parameter in the first set, and parameter 2 is used as parameter 3 in the first set, that is, the first set includes parameter 1, parameter 2, and parameter 3, and the second set includes parameter 1, parameter 2, and parameter 4.

In the foregoing solutions, unequal probability sampling is performed, so that occurrence counts of different parameters in multiple sets between which the user needs to perform selection are balanced. In addition, a difference between weights of different parameters of one element is limited, so that when the user selects a preferred element from the multiple sets, an invalid set with an excessively large difference between the weights of the different parameters of the element does not occur, to improve efficiency of collecting preference data of the user for different elements in the multiple sets.

In a possible implementation, after the terminal device determines the first set, a difference between prior probabilities of different values of any parameter in the first set may be excessively large. For example, a parameter of a first element and a parameter of a second element in set 1 each are a price, a value of the price of the first element is CNY1,000 (a prior probability is 0.7), and a value of the price of the second element is CNY10,000 (a prior probability is 0.1). A probability that the user prefers the first element in the first element and the second element in set 1 is excessively high, causing low efficiency of collecting preference data of the user for the first element and the second element in set 1. Therefore, the terminal device may further perform the following steps B1 to B3 to optimize the first set determined in steps A1 and A2, to reduce the difference between the prior probabilities of the different values of the any parameter corresponding to the first set.

Step B 1: Determine a third set based on the first information.

For step B1, refer to the descriptions in steps A1 and A2. Details are not described herein again.

Step B2: Determine a first loss corresponding to the third set.

The first loss indicates a difference between prior probabilities corresponding to N values of a fourth parameter in the third set, a prior probability corresponding to any one of the N values indicates a probability that the user selects the any value from at least one value of the fourth parameter, and k is a positive integer.

For example, set 1 includes three parameters: parameter 1, parameter 2, and parameter 3. A prior probability of value 1 of parameter 1 is 0.1, a prior probability of value 2 of parameter 1 is 0.4, and a difference between the prior probabilities of the two values is 0.3, that is, a first loss corresponding to set 1 is 0.3.

Step B3: Perform a first update operation on the N values of the fourth parameter in the third set to obtain the first set.

N values of the fourth parameter in the first set and the N values of the fourth parameter in the third set have at least one different value, the first set corresponds to a second loss, the second loss indicates a difference between prior probabilities corresponding to the N values of the fourth parameter in the first set, and the second loss is less than the first loss.

Optionally, the N values of the fourth parameter in the first set are N values that correspond to a smallest second loss and that are in the at least one value of the fourth parameter.

For example, values of parameter 1 include value 1, value 2, value 3, value 4, and value 5. The values of parameter 1 are traversed, and two different values are selected from value 3 (a prior probability 0.2), value 4 (a prior probability 0.4), and value 5 (a prior probability 0.5) as two values of parameter 1 in set 2. When value 3 and value 4 are selected as the two values of parameter 1 in set 2, a second loss corresponding to set 2 is 0.2 (less than the first loss 0.3 corresponding to set 1). When value 3 and value 5 are selected as the two values of parameter 1 in set 2, a second loss corresponding to set 2 is 0.3 (equal to the first loss 0.3 corresponding to set 1). When value 4 and value 5 are selected as the two values of parameter 1 in set 2, a second loss corresponding to set 2 is 0.1 (less than the first loss 0.3 corresponding to set 1). Therefore, value 4 and value 5 may be selected as the two values of parameter 1 in set 2, so that the second loss corresponding to set 2 is less than the first loss corresponding to set 1, and the second loss corresponding to set 2 is the smallest.

In another possible implementation, after the terminal device performs steps B1 to B3 to optimize the first set determined in steps A1 and A2, a difference between sums of prior probabilities corresponding to values of all parameters of different elements in the first set may be excessively large. For example, a sum of prior probabilities corresponding to values of all parameters of a first element in set 1 is 0.8, and the sum of the prior probabilities corresponding to the values of all the parameters of the first element in set 1 is 0.2. A probability that the user prefers the first element in the first element and the second element in set 1 is excessively high, causing low efficiency of collecting preference data of the user for the first element and the second element in set 1. Therefore, the terminal device may further perform the following steps C1 to C3 to optimize the first set determined in steps B1 to B3, to reduce the difference between the sums of the prior probabilities corresponding to the values of all the parameters of the different elements in the first set.

Step C1: Perform the first update operation on the N values of the fourth parameter in the third set to obtain a fourth set.

For step C1, refer to the descriptions in step B3. Details are not described herein again.

Step C2: Determine a first difference corresponding to the fourth set.

The first difference indicates a difference between utilities corresponding to N elements in the fourth set, and a utility corresponding to any one of the N elements indicates a sum of prior probabilities corresponding to values of all parameters included in the any element.

For example, set 1 includes element 1 and element 2. Element 1 includes value 1 (a prior probability 0.1) of parameter 1, value 2 (a prior probability 0.2) of parameter 2, and value 3 (a prior probability 0.3) of parameter 3. Element 2 includes value 4 (a prior probability 0.2) of parameter 1, value 5 (a prior probability 0.1) of parameter 2, and value 6 (a prior probability 0.1) of parameter 3. A utility corresponding to element 1 is a sum of the prior probabilities of value 1, value 2, and value 3, that is, 0.6, and a utility corresponding to element 2 is a sum of the prior probabilities of value 4, value 5, and value 6, that is, 0.4. Therefore, a first difference corresponding to set 1 is 0.2.

Step C3: Perform a second update operation on N values of a fifth parameter in the fourth set to obtain the first set.

The fifth parameter is any parameter in the fourth set, a value of the fifth parameter of a first element in the first set is a value of the fifth parameter of a second element in the fourth set, a value of the fifth parameter of the second element in the first set is a value of the fifth parameter of the first element in the fourth set, the first set corresponds to a second difference, the second difference indicates a difference between utilities corresponding to the N elements in the first set, and the second difference is less than the first difference.

For example, value 2 of parameter 2 of element 1 in set 1 described in step C2 is exchanged with value 5 of parameter 2 of element 2 in set 1, to obtain set 2, in other words, the value of parameter 2 of element 1 in set 1 is value 5, and the value of parameter 2 of element 2 in set 2 is value 2. A utility corresponding to element 1 in set 2 is a sum of the prior probabilities of value 1, value 5, and value 3, that is, 0.5, and a utility corresponding to element 2 in set 2 is a sum of the prior probabilities of value 4, value 2, and value 6, that is, 0.5. Therefore, a second difference corresponding to set 2 is 0, which is less than the first difference 0.2 corresponding to set 1.

In still another possible implementation, after the terminal device performs steps C1 to C3 to optimize the first set determined in steps B1 to B3, occurrence counts of different values of any parameter in the first set in the questionnaire may not be balanced. For example, an occurrence count of value 1 of parameter 1 in the questionnaire is 8, and an occurrence count of value 2 of parameter 2 in the questionnaire is merely 1. Therefore, the terminal device may further perform the following steps D1 to D3 to optimize the first set determined in steps C1 to C3, so that the occurrence counts of the different values of the any parameter in the first set in the questionnaire are balance.

Step D1: Perform the second update operation on the N values of the fifth parameter in the fourth set to obtain a fifth set.

For step D1, refer to the descriptions in step C3. Details are not described herein again.

Step D2: Determine an occurrence count of a value of the fifth parameter of a first element in the fifth set in the questionnaire.

Step D3: If the occurrence count is greater than a third threshold, perform a third update operation on the value of the fifth parameter of the first element in the fifth set to obtain the first set.

The occurrence count of the value of the fifth parameter of the first element in the first set in the questionnaire is less than the third threshold, the first set corresponds to a third difference, the third difference indicates a difference between utilities corresponding to the N elements in the first set, the third difference is less than or equal to the second difference, the first set corresponds to a third loss, the third loss indicates a difference between prior probabilities corresponding to N values of the fifth parameter in the first set, the fifth set corresponds to a fourth loss, the fourth loss indicates a difference between prior probabilities corresponding to N values of the fifth parameter in the fifth set, and a difference between the third loss and the fourth loss is less than a fourth threshold.

For example, if occurrence counts of value 2, value 5, and value 8 (a prior probability 0.2) of parameter 2 in the questionnaire are respectively 3, 2, and 1, it may be determined that the fourth threshold is average value 2 of 3, 2, and 1. Value 2 of parameter 2 of element 2 in set 2 described in step C3 is replaced with value 8, to obtain set 3, that is, a value of parameter 2 of element 1 in set 3 is value 5, and a value of parameter 2 of element 2 in set 3 is value 8. A utility corresponding to element 1 in set 3 is the sum of the prior probabilities of value 1, value 5, and value 3, that is, 0.5, and a utility corresponding to element 2 in set 3 is a sum of the prior probabilities of value 4, value 8, and value 6, that is, 0.5. Therefore, a second difference corresponding to set 3 is 0, which is equal to the second difference 0 corresponding to set 2. A third loss corresponding to set 3 is 0.1, and a fourth loss corresponding to set 2 is 0.1. The difference between the third loss and the fourth loss is 0, which is less than the fourth threshold 0.2.

S303: Obtain second information based on the questionnaire, to complete data collection on the user.

In this embodiment of this application, the second information indicates an element selected by the user from the N elements in the first set. For example, set 1 includes element 1 and element 2, and in set 1, the user prefers element 1.

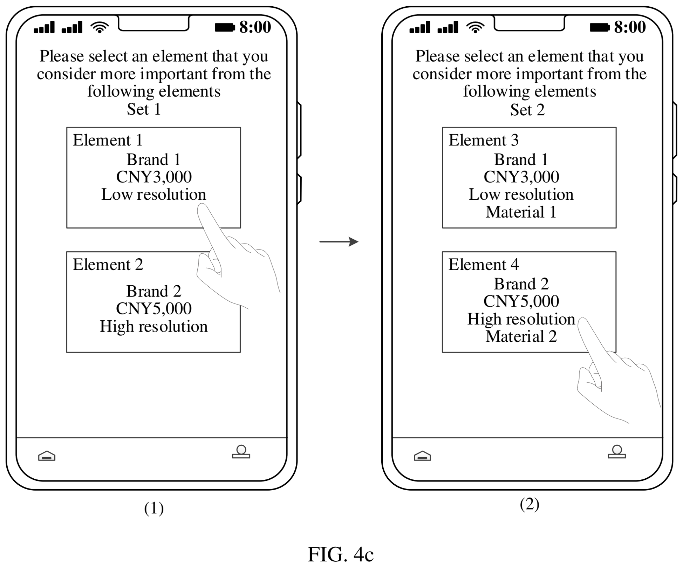

During specific implementation, if there are multiple sets in the questionnaire determined in S303, the terminal device may display, on the display screen, an interface shown in (1) in FIG. 4c, where set 1 may be displayed on the interface. Set 1 includes two elements. For example, values of three parameters, namely, brand, price, and resolution, included in element 1 are brand 1, CNY3,000, and low resolution, and values of three parameters, namely, brand, price, and resolution, included in element 2 are brand 2, CNY5,000, and high resolution. That is, values of same parameters in element 1 and element 2 are all different. In addition, the user selects text of one element from the two elements in set 1, for example, "please select an element that you consider more important from the following elements". The user may select element 1 from element 1 and element 2. To be specific, the user prefers brand 1, CNY3,000, and low resolution.

When the terminal device detects an operation of selecting element 1 by the user, in response to the operation, the terminal device may display, on the display screen, an interface shown in (2) in FIG. 4c, where set 2 may be displayed on the interface. Set 2 includes two elements. For example, values of four parameters, namely, brand, price, resolution, and display screen material, included in element 3 are brand 1, CNY3,000, low resolution, and material 1, and values of four parameters, namely, brand, price, resolution, Blu-ray certification, and a display screen material, included in element 4 are brand 2, CNY5,000, high resolution, and material 2. That is, values of same parameters in element 3 and element 4 are all different. In addition, element 3 has a value of one more parameter than element 1: material 1, element 4 has a value of one more parameter than element 2: material 2. In addition, the user selects text of one element from the two elements in set 2, for example, "please select an element that you consider more important from the following elements". The user may select element 4 from element 3 and element 4. To be specific, the user prefers brand 2, CNY5,000, high resolution, and material 2.

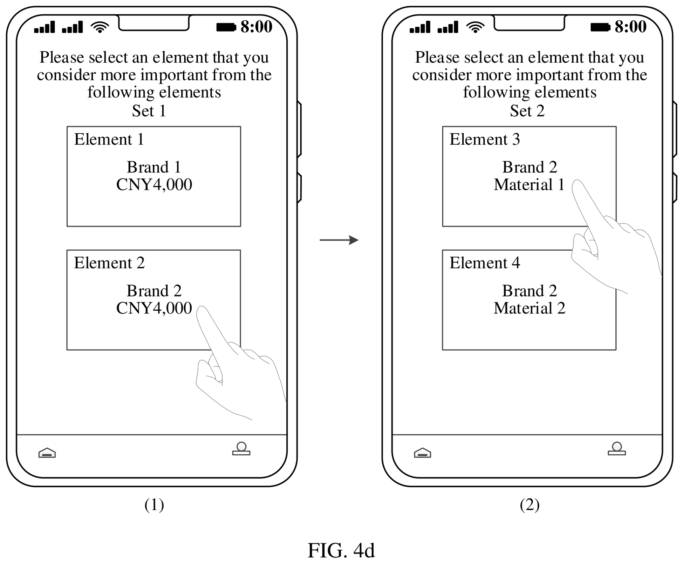

Alternatively, the terminal device may display, on the display screen, an interface shown in (1) in FIG. 4d, where set 1 may be displayed on the interface. Set 1 includes two elements. For example, values of two parameters, namely, brand and price, included in element 1 are brand 1 and CNY4,000, and values of two parameters, namely, brand and price, included in element 2 are brand 2 and CNY4,000. That is, values of only one same parameter in element 1 and element 2 are different. In addition, the user selects text of one element from the two elements in set 1, for example, "please select an element that you consider more important from the following elements". The user may select element 2 from element 1 and element 2. To be specific, the user prefers brand 2.

When the terminal device detects an operation of selecting element 2 by the user, in response to the operation, the terminal device may display, on the display screen, an interface shown in (2) in FIG. 4d, where set 2 may be displayed on the interface. Set 2 includes two elements. For example, values of two parameters, namely, brand, price, and display screen material, included in element 3 are respectively brand 2 and material 1, and values of two parameters, namely, brand and display screen material, included in element 4 are brand 2 and material 2. That is, values of only one same parameter in element 3 and element 4 are different. In addition, quantities of values of parameters included in element 3 and element 4 are the same as quantities of values of parameters included in element 1 and element 2. In addition, the user selects text of one element from the two elements in set 2, for example, "please select an element that you consider more important from the following elements". The user may select element 3 from element 3 and element 4. To be specific, the user prefers material 1.

In the foregoing solutions, a preference of the user for multiple parameters of one object and multiple values of each parameter may be obtained based on the first information. Therefore, a set displayed to the user by using the questionnaire may be obtained based on a preferred parameter and/or a preferred value of the user, so that the questionnaire meets a personalized requirement of the user, to help improve patience of the user and improve data collection efficiency. In addition, the preference of the user for the multiple parameters of the object and the multiple values of each parameter may be further obtained based on the questionnaire, so that collected user data is more targeted, and more personalized content is set for the user, thereby improving user experience.

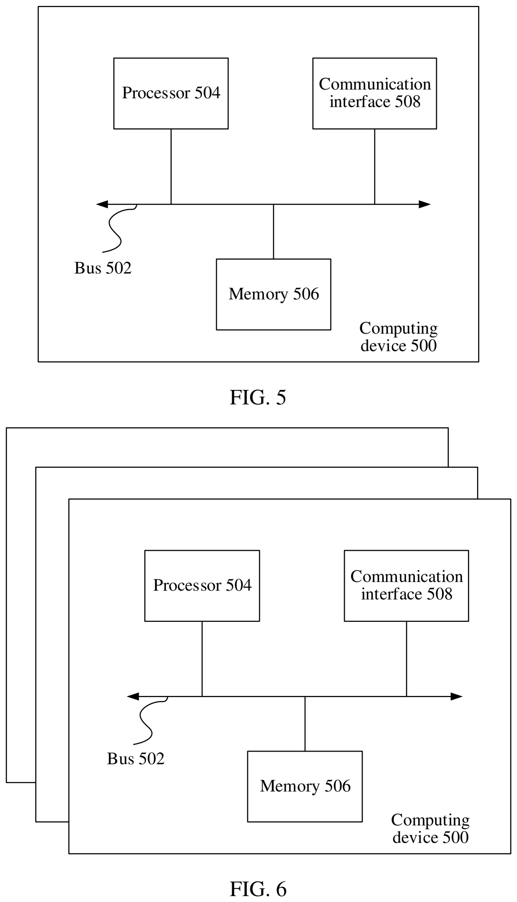

Based on the foregoing embodiments, embodiments of this application further provide a computing device. FIG. 5 is a diagram of a structure of a computing device according to an embodiment of this application. The computing device 500 includes a bus 502, a processor 504, a memory 506, and a communication interface 508. The processor 504, the memory 506, and the communication interface 508 communicate with each other through the bus 502. The computing device 500 may be a terminal device or a server. It should be understood that quantities of processors and memories of the computing device 500 are not limited in this application.

The bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 5, but it does not mean that there is only one bus or only one type of bus. The bus 502 may include a path for information transmission between components (for example, the memory 506, the processor 504, and the communication interface 508) of the computing device 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). The memory 506 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 506 stores executable program code, and the processor 504 executes the executable program code to separately implement functions of a communication module and a processing module, to implement the data collection method in the foregoing method embodiment. That is, the memory 506 stores instructions used to perform the data collection method in the foregoing method embodiment.

The communication interface 508 uses a transceiver module, for example, but not limited to, a network interface card or a transceiver, to implement communication between the computing device 500 and another device or a communication network.

Based on the foregoing embodiments, an embodiment of this application further provides a computing device cluster. The computing device cluster includes at least one computing device. The computing device may be an electronic device.

As shown in FIG. 6, the computing device cluster includes at least one computing device 500. A memory 506 in one or more computing devices 500 in the computing device cluster may store same instructions used to perform the data collection method in the foregoing method embodiment.

In some possible implementations, the memory 506 in one or more computing devices 500 in the computing device cluster may alternatively store a part of instructions used to perform the data collection method in the foregoing method embodiment. In other words, a combination of one or more computing devices 500 may jointly execute the instructions used to perform the data collection method in the foregoing method embodiment.

It may be understood that, memories 506 in different computing devices 500 in the computing device cluster may store different instructions, respectively used to perform some functions of the electronic device. In other words, the instructions stored in the memories 506 in the different computing devices 500 may implement a function of one or more modules of a communication module and a processing module.

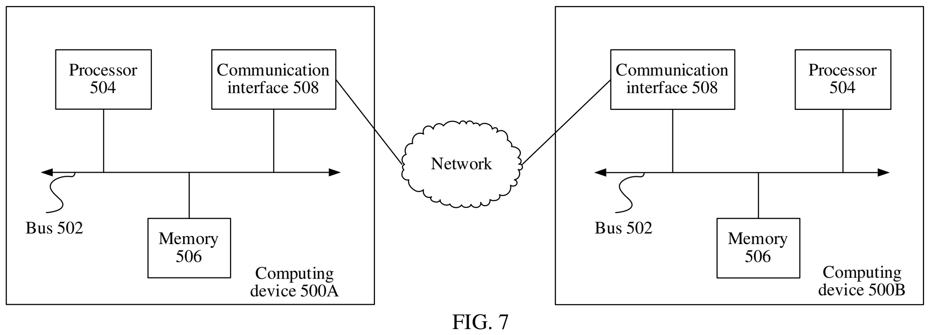

In some possible implementations, the one or more computing devices in the computing device cluster may be connected via a network. The network may be a wide area network, a local area network, or the like. FIG. 7 shows a possible implementation. As shown in FIG. 7, two computing devices 500A and 500B are connected via a network. Specifically, a communication interface in each computing device is connected to the network. In this type of possible implementation, a memory 506 in the computing device 500A stores instructions for performing a function of a communication module. In addition, a memory 506 in the computing device 500B stores instructions for performing a function of a processing module.

It should be understood that functions of the computing device 500A shown in FIG. 7 may alternatively be completed by multiple computing devices 500. Similarly, functions of the computing device 500B may alternatively be completed by multiple computing devices 500.

Based on the foregoing embodiments, an embodiment of this application further provides a computer-readable storage medium. The computer-readable storage medium may be any usable medium that can be stored by a computing device or a data storage device like a data center that includes one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the data collection method in the foregoing method embodiment.

Based on the foregoing embodiments, an embodiment of this application further provides a computer program product including instructions. The computer program product may be software or a program product that includes instructions and that can run on a computing device or that is stored in any available medium. When the computer program product runs on at least one computing device, the at least one computing device is caused to perform the data collection method in the foregoing method embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data collection device to generate a machine, so that the instructions executed by the computer or the processor of the another programmable data collection device generate an apparatus for implementing a specific function in one or more procedures in the flowcharts and/or in one or more blocks in the block diagrams.

These computer program instructions may alternatively be stored in a computer-readable memory that can instruct a computer or another programmable data collection device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data collection device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this way, provided that these modifications and variations of this application fall within the scope of the claims of this application and equivalent technologies thereof, this application is also intended to cover these modifications and variations.

## Claims

1. A data collection method, comprising:
obtaining first information, wherein the first information indicates M parameters selected by a user and indicates at least one value of each of the M parameters, the M parameters correspond to one object, and M is a positive integer;
determining a questionnaire based on the first information, wherein the questionnaire comprises a first set comprising N elements, each of the N elements comprises a value of at least one parameter, the at least one parameter belongs to the M parameters, the N elements comprise same parameters, values of at least one same parameter in the N elements are different, and N is a positive integer; and
obtaining second information based on the questionnaire, to complete data collection on the user, wherein the second information indicates an element selected by the user from the N elements.

2. The method according to claim 1, wherein determining the questionnaire based on the first information comprises:
determining that a first parameter in the M parameters is a 1^{st} parameter in the first set, and determining that N values of the first parameter are N values of the 1^{st} parameter in the first set, wherein the N values of the first parameter are at least one value of the first parameter in the M parameters; and
determining that a second parameter that meets a first condition in the M parameters is an i^{th} parameter in the first set, and determining that N values of the second parameter are N values of the i^{th} parameter in the first set, wherein the N values of the second parameter are at least one value of the second parameter in the M parameters, and i is an integer greater than 1.

3. The method according to claim 2, wherein the first condition comprises:
a difference between a first weight and a second weight is less than a first threshold, wherein the first weight is a weight corresponding to any parameter of the 1^{st} parameter to an (i-1)^{th} parameter in the first set, and the second weight is a weight corresponding to the second parameter;
a remaining occurrence count in the questionnaire is greater than a second threshold, and the remaining occurrence count is related to a preset total occurrence count; and
the second parameter is different from each of the 1^{st} parameter to the (i-1)^{th} parameter in the first set.

4. The method according to claim 2, wherein the first condition comprises:
a remaining occurrence count in the questionnaire is greater than a second threshold, and the remaining occurrence count is related to a preset total occurrence count; and
the second parameter is different from each of the 1^{st} parameter to an (i-1)^{th} parameter in the first set.

5. The method according to claim 4, wherein determining that the second parameter that meets the first condition in the M parameters is the i^{th} parameter in the first set comprises:
when a quantity of parameters that meet the first condition in the M parameters is greater than 1, determining, as the second parameter, one parameter from the parameters that meet the first condition, wherein the second parameter corresponds to a first distance, the first distance is a smallest value of distances corresponding to the M parameters, and the first distance is distances between the second parameter and the 1^{st} parameter to the (i-1)^{th} parameter in the first set.

6. The method according to claim 5, wherein the distances between the second parameter and the 1^{st} parameter to the (i-1)^{th} parameter in the first set are a smallest value of differences between a weight of the second parameter and weights of the 1^{st} parameter to the (i-1)^{th} parameter in the first set.

7. The method according to claim 2, wherein the questionnaire further comprises a second set, the second set is a set determined before the first set, and the first condition comprises:
the second parameter is comprised in the second set; and
the second parameter is different from each of the 1^{st} parameter to an (i-1)^{th} parameter in the first set.

8. The method according to claim 7, wherein determining that the second parameter that meets the first condition in the M parameters is the i^{th} parameter in the first set comprises:
when a quantity of parameters that meet the first condition in the M parameters is greater than 1, determining, as the second parameter, one parameter from the parameters that meet the first condition, wherein
the second parameter corresponds to a second distance, the M parameters further comprise a third parameter that meets a second condition, the third parameter corresponds to a third distance, a sum of the second distance and the third distance is the smallest, the second distance is distances between the second parameter and the 1^{st} parameter to the (i-1)^{th} parameter in the first set, and the third distance is distances between the third parameter and all parameters other than the second parameter in the second set.

9. The method according to claim 8, wherein the second condition comprises:
a remaining occurrence count in the questionnaire is greater than a second threshold; and
the second parameter is different from each of the parameters other than the second parameter in the second set.

10. The method according to claim 8 or 9, wherein after determining, as the second parameter, the parameter from the parameters that meet the first condition, the method further comprises:
replacing the second parameter in the second set with the third parameter.

11. The method according to any one of claims 1 to 10, wherein the method further comprises:
determining a third set based on the first information;
determining a first loss corresponding to the third set, wherein the first loss indicates a difference between prior probabilities corresponding to N values of a fourth parameter in the third set, and the fourth parameter is any parameter in the third set; and
performing a first update operation on the N values of the fourth parameter in the third set to obtain the first set, wherein N values of the fourth parameter in the first set and the N values of the fourth parameter in the third set have at least one different value, the first set corresponds to a second loss, the second loss indicates a difference between prior probabilities corresponding to the N values of the fourth parameter in the first set, and the second loss is less than the first loss.

12. The method according to claim 11, wherein performing the first update operation on the N values of the fourth parameter in the third set to obtain the first set comprises:
performing the first update operation on the N values of the fourth parameter in the third set to obtain a fourth set;
determining a first difference corresponding to the fourth set, wherein the first difference indicates a difference between utilities corresponding to N elements in the fourth set, and a utility corresponding to any one of the N elements indicates a sum of prior probabilities corresponding to values of all parameters comprised in the any element; and
performing a second update operation on N values of a fifth parameter in the fourth set to obtain the first set, wherein the fifth parameter is any parameter in the fourth set, a value of the fifth parameter of a first element in the first set is a value of the fifth parameter of a second element in the fourth set, a value of the fifth parameter of the second element in the first set is a value of the fifth parameter of the first element in the fourth set, the first set corresponds to a second difference, the second difference indicates a difference between utilities corresponding to the N elements in the first set, and the second difference is less than the first difference.

13. The method according to claim 11, wherein performing a second update operation on N values of a fifth parameter in the fourth set to obtain the first set comprises:
performing the second update operation on the N values of the fifth parameter in the fourth set to obtain a fifth set;
determining an occurrence count of a value of the fifth parameter of the first element in the fifth set in the questionnaire; and
if the occurrence count is greater than a third threshold, performing a third update operation on the value of the fifth parameter of the first element in the fifth set to obtain the first set, wherein
the occurrence count of the value of the fifth parameter of the first element in the first set in the questionnaire is less than the third threshold, the first set corresponds to a third difference, the third difference indicates a difference between utilities corresponding to the N elements in the first set, the third difference is less than or equal to the second difference, the first set corresponds to a third loss, the third loss indicates a difference between prior probabilities corresponding to N values of the fifth parameter in the first set, the fifth set corresponds to a fourth loss, the fourth loss indicates a difference between prior probabilities corresponding to N values of the fifth parameter in the fifth set, and a difference between the third loss and the fourth loss is less than a fourth threshold.

14. A computing device cluster, wherein the computing device cluster comprises at least one computing device, and each of the at least one computing device comprises a processor and a memory, wherein the memory is configured to store computer program instructions; and
the processor invokes the computer program instructions stored in the memory to perform the method according to any one of claims 1 to 13.

15. A computer-readable storage medium, comprising computer program instructions, wherein when the computer program instructions are executed by a computing device, the computing device performs the method according to any one of claims 1 to 13.

16. A computer program product comprising instructions, wherein when the instructions are run by a computing device, the computing device is caused to perform the method according to any one of claims 1 to 13.
